Europäisches Patentamt

European Patent Office

Office européen des brevets

(11) Veröffentlichungsnummer: **0 334 252**
A1

# EUROPÄISCHE PATENTANMELDUNG

(21) Anmeldenummer: 89104920.7

(22) Anmeldetag: 18.03.89

(51) Int. Cl.⁴: **B65D 5/54** , **B65D 5/24** , A01K 1/01

(30) Priorität: 24.03.88 DE 3809877

(43) Veröffentlichungstag der Anmeldung:
27.09.89 Patentblatt 89/39

(84) Benannte Vertragsstaaten:
AT BE CH DE ES FR GB GR IT LI LU NL SE

(71) Anmelder: PROMENA AG
Rheinstrasse 81
CH-4133 Pratteln(CH)

(72) Erfinder: Gaube, Günther
Breslauer Strasse 40
D-8960 Kempten(DE)
Erfinder: De Paoli, Leo
Im Schänzli 101 b
CH-4132 Muttenz(CH)

(74) Vertreter: Hutzelmann, Gerhard
Duracher Strasse 22
D-8960 Kempten(DE)

(54) **Faltschachtel.**

(57). Faltschachtel aus Karton mit einer Bodenfläche (2), zwei Seitenwänden (3, 4) und zwei Stirnwänden (7, 8) sowie einer Deckfläche (5), wobei die Seitenwände und die Stirnwände durch Zwickelflächen (10) mit einander verbunden sind, wodurch eine dichte Wanne gebildet wird. Aus der Deckfläche ist entlang einer Ritzlinie (13) ein Mittelabschnitt (14) heraustrennbar; durch diese Ausgestaltung ist die Faltschachtel als Katzentoilette und auch Hundetoilette einsetzbar.

Fig. 2

# Faltschachtel

Die Erfindung bezieht sich auf eine Faltschachtel aus Karton od. dgl. mit einer Bodenfläche, zwei Seitenwänden und zwei Stirnwänden sowie einer Deckfläche.

Der Erfindung liegt die Aufgabe zugrunde, eine derartige Faltschachtel so auszugestalten, daß sie im auf ihrer Bodenfläche liegenden Zustand wannenartig dicht ist.

Diese Aufgabe wird erfindungsgemäß dadurch gelöst, daß eine der beiden Seitenwände über eine Längsnaht mit der Deckfläche verbunden ist, daß an der Bodenfläche zwei Klappen angelenkt sind, die zur Bildung der beiden Stirnwände dienen, und daß an jeder der beiden Seitenwände zwei Zwickelflächen angelenkt sind, die ihrerseits mit den Stirnwand-Klappen verbunden sind.

Damit ist zumindest der untere Abschnitt der Faltschachtel dicht und ohne Klebstellen ausgebildet.

Sehr vorteilhaft ist es auch, wenn erfindungsgemäß an der Deckfläche Klappen angelenkt sind, welche die Stirnwand-Klappen wenigstens teilweise überdecken und mit diesen durch Kleben, Siegeln od.dgl. verbunden sind.

Damit werden die Steifigkeit und die Dichtigkeit der Faltschachtel weiter verbessert.

Eine vorteilhafte Ausgestaltung der Erfindung liegt auch darin, daß in der Deckfläche in geringem Abstand vom Rand und vorzugsweise parallel zu diesem Ritzlinien vorgesehen sind, welche ein Heraustrennen eines Mittelabschnittes der Deckfläche erlauben.

Damit ist eine leichte Öffnungsmöglichkeit der Faltschachtel geschaffen, durch die eine gute Zugänglichkeit des Innenraumes gegeben ist. Gleichzeitig bleibt die Faltschachtel auch nach dem Heraustrennen des Mittelabschnittes sehr stabil, da ein Randstreifen der Deckfläche stehen bleibt.

Eine besonders günstige Weiterbildung der Erfindung liegt darin, daß die Ritzlinie doppelseitig ausgebildet ist, von der die eine Spur von der Oberseite und die andere Spur geringfügig versetzt dazu von der Unterseite her angebracht ist, wobei beide etwa zur Mitte der Materialstärke reichen. Diese Doppelritzlinie gewährleistet einerseits ein sehr leichtes Aufreißen, ergibt andererseits aber eine sehr hohe Dichtigkeit.

Sehr vorteilhaft ist es auch, wenn erfindungsgemäß die Ecken der Ritzlinie abgerundet und wenigstens an einer Stelle mit einem tiefer eingeschnittenen Ritz- oder Perforationsabschnitt versehen sind. Das Einreißen des Mittelabschnittes wird dadurch ganz wesentlich erleichtert.

Eine sehr vorteilhafte Ausgestaltung der Erfindung liegt darin, daß die Faltschachtel wenigstens auf ihrer Innenseite mit einer Kunststoffbeschichtung versehen ist.

Dadurch und durch die besondere Ausgestaltung kann die Faltschachtel wasserdicht ausgebildet werden.

Sehr vorteilhaft ist es auch, wenn die Faltschachtel erfindungsgemäß zur Verwendung als Katzentoilette mit einer Füllung aus einem den Urin aufsaugenden und dessen Geruch bindenden Materials dient.

In der Zeichnung ist die Erfindung anhand eines Ausführungsbeispiels veranschaulicht. Dabei zeigen:

Fig. 1 einen flachliegenden Kartonzuschnitt und

Fig. 2 ein Schaubild einer Faltschachtel

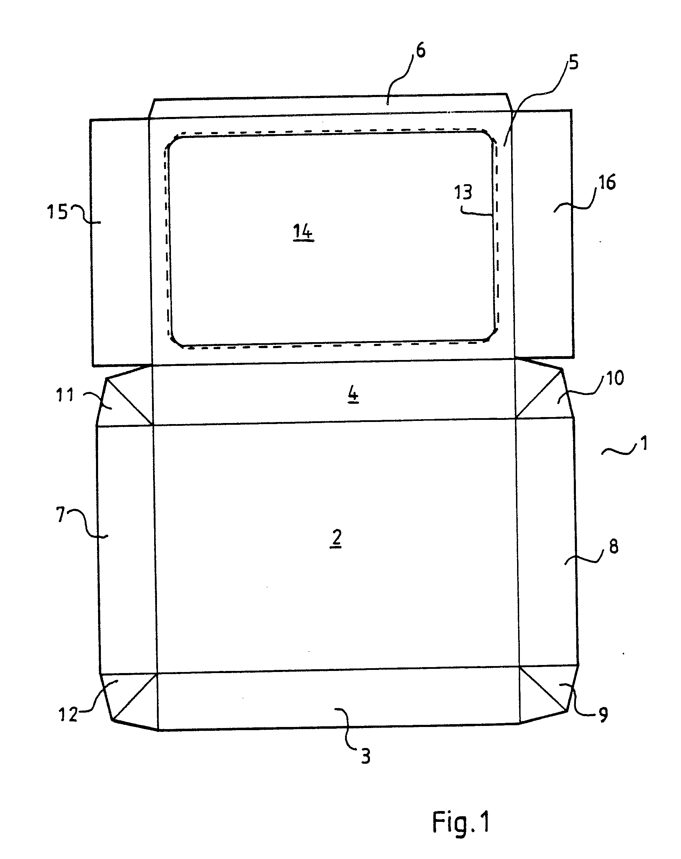

Mit 1 ist in Fig. 1 ein Kartonzuschnitt bezeichnet, der eine Bodenfläche 2, zwei an dieser angelenkte Seitenwände 3 und 4 sowie eine an der Seitenwand 4 angelenkte Deckfläche 5 aufweist. An der Deckfläche 5 ist ein Randstreifen 6 angeformt, der beim Aufrichten des Zuschnittes zu einer Faltschachtel mit der Seitenwand 3 verklebt wird.

An der Bodenfläche 2 sind darüber hinaus zwei Klappen 7 und 8 angeformt, die in ihrer Breite der Höhe der Seitenwände 3 und 4 entsprechen. Diese Klappen 7 und 8 sind über in sich faltbare Zwickelecken 9 bis 12 mit den Seitenwänden 3 bzw. 4 verbunden und bilden beim Auffalten des Zuschnittes die Stirnwände einer Bodenwanne, die auch die Bodenfläche und die Seitenwände enthält. Die Deckfläche 5 ist mit einer doppelspurigen Ritzlinie 13 versehen, die in geringem Abstand vom Rand und parallel zu diesem verläuft. Die eine Spur dieser Ritzlinie ist von der Oberseite und die andere von der Unterseite her in die Deckfläche eingebracht. Durch diese Ritzlinie 13 ist ein Mittelabschnitt 14 abgeteilt.

An der Deckfläche 5 sind noch zwei Klappen 15 und 16 angelenkt, die in ihrer Breite etwa der Breite der Stirnwand-Klappen 7 und 8 entsprechen.

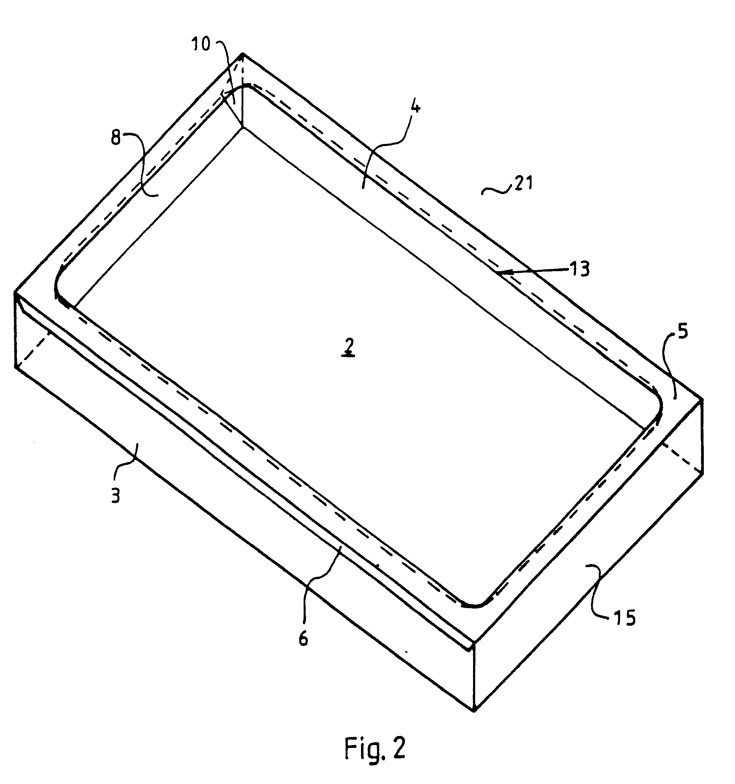

In Fig. 2 ist aus dem Zuschnitt gemäß Fig. 1 eine Faltschachtel 21 aufgerichtet, die entlang der Ritzlinie 13 aufgerissen und deren Mittelabschnitt 14 entfernt ist. Im Inneren ist die Faltschachtel mit sogenannter Katzenstreu befüllt und dient in dem dargestellten geöffneten Zustand als Katzentoilette und auch Hundetoilette.

Um diese besonders wirkungsvoll abzudichten, ist die Faltschachtel auf ihrer Innenseite mit einer Kunststoffschicht versehen.

## Ansprüche

1. Faltschachtel aus Karton od.dgl. mit einer Bodenfläche, zwei Seitenwänden und zwei Stirnwänden sowie einer Deckfläche, **dadurch gekennzeichnet,** daß eine der beiden Seitenwände (3,4) über eine Längsnaht mit der Deckfläche (5) verbunden ist, daß an der Bodenfläche (2) zwei Klappen (7,8) angelenkt sind, die zur Bildung der beiden Stirnwände dienen, und daß an jeder der beiden Seitenwände (3,4) zwei Zwickelflächen (9,12 bzw. 10,11) angelenkt sind, die ihrerseits mit den Stirnwand-Klappen (7,8) verbunden sind.

2. Faltschachtel nach Anspruch 1, **dadurch gekennzeichnet,** daß an der Deckfläche (5) Klappen (15,16) angelenkt sind, welche die Stirnwand-Klappen (7,8) wenigstens teilweise überdecken und mit diesen durch Kleben, Siegeln od.dgl. verbunden sind.

3. Faltschachtel nach Anspruch 1 oder 2, **dadurch gekennzeichnet,** daß in der Deckfläche (5) in geringem Abstand vom Rand und vorzugsweise parallel zu diesem Ritzlinien (13) vorgesehen sind, welche ein Heraustrennen eines Mittelabschnittes (14) der Deckfläche (5) erlauben.

4. Faltschachtel nach Anspruch 3, **dadurch gekennzeichnet,** daß die Ritzlinie (13) doppelspurig ausgebildet ist, von der die eine Spur von der Oberseite und die andere Spur geringfügig versetzt dazu von der Unterseite her angebracht ist, wobei beide etwa zur Mitte der Materialstärke reichen.

5. Faltschachtel nach Anspruch 3 oder 4, **dadurch gekennzeichnet,** daß die Ecken der Ritzlinie (13) abgerundet und wenigstens an einer Stelle mit einem tiefer eingeschnittenen Ritz- oder Perforationsabschnitt versehen sind.

6. Faltschachtel nach einem der vorhergehenden Ansprüche, **dadurch gekennzeichnet,** daß die Faltschachtel (21) wenigstens auf ihrer Innenseite mit einer Kunststoffbeschichtung versehen ist.

7. Faltschachtel nach einem der vorhergehenden Ansprüche zur Verwendung als Katzentoilette und auch Hundetoilette mit einer Füllung aus einem den Urin aufsaugenden und dessen Geruch bindenden Material.

Fig.1

Fig. 2

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | FR-A-2 217 957 (LA ROCHETTE-CENPA) * Insgesamt * | 1-3,7 | B 65 D 5/54 |
| Y | | 4,5 | B 65 D 5/24 |
| | --- | | A 01 K 1/01 |
| X | US-A-4 541 360 (Q.D. HIGGINS et al.) * Figuren 1-3; Spalte 2, Zeile 41 - Spalte 3, Zeile 64; Anspruch 5 * | 1-3,6,7 | |
| | --- | | |
| Y | DE-A-3 508 093 (UNILEVER N.V.) * Figur 2; Spale 3, Zeilen 15-37 * | 4 | |
| | --- | | |
| Y | US-A-3 019 944 (H.N. NELSON et al.) * Figuren 4-4b; Spalte 2, Zeilen 29-31; Spalte 3, Zeilen 4-7 * | 5 | |
| | ----- | | |

| RECHERCHIERTE SACHGEBIETE (Int. Cl.4) |
|---|
| B 65 D A 01 K |

Der vorliegende Recherchenbericht wurde für alle Patentansprüche erstellt

| Recherchenort | Abschlußdatum der Recherche | Prüfer |
|---|---|---|
| DEN HAAG | 01-06-1989 | PERNICE,C. |